Europäisches Patentamt

(19) European Patent Office

Office européen des brevets

(11) Publication number: **0 221 602**
**B1**

# EUROPEAN PATENT SPECIFICATION

(12)

(45) Date of publication of the patent specification:
**31.05.89**

(21) Application number: **86201846.2**

(22) Date of filing: **22.10.86**

(51) Int. Cl.⁴: **F16F 9/46**

(54) Electrically adjustable shock absorber.

(30) Priority: **05.11.85 NL 8503031**

(43) Date of publication of application:
**13.05.87 Bulletin 87/20**

(45) Publication of the grant of the patent:
**31.05.89 Bulletin 89/22**

(84) Designated Contracting States:
**AT BE CH DE ES FR GB IT LI LU NL SE**

(56) References cited:
**EP-A- 0 207 409**
**DE-A- 3 241 984**
**DE-A- 3 418 649**
**DE-A- 3 434 566**
**GB-A- 1 158 898**
**GB-A- 2 126 687**
**GB-A- 2 159 917**

**The file contains technical information submitted after the application was filed and not included in this specification**

(73) Proprietor: **KONI B.V., Langeweg 1 P.O. Box 1014, NL-3260 AA Oud-Beijerland(NL)**

(72) Inventor: **de Kock, Cornelis, Waalhavenstraat 5, NL-3262 GP Oud-Beijerland(NL)**

(74) Representative: **van der Beek, George Frans et al, Nederlandsch Octrooibureau Scheveningseweg 82 P.O. Box 29720, NL-2502 LS 's-Gravenhage(NL)**

ACTORUM AG

## Description

The invention relates to a shock absorber, comprising a cylinder with damping fluid, a piston with piston rod displaceable in said cylinder, a sleeve disposed in the piston and having at least two openings or series of openings, while at least two duct systems of differing damping characteristic are disposed in the piston, and each duct system connects to an opening or series of openings in the sleeve, and where electrically operated control means are present to close off or release one or more of the openings in the sleeve as desired.

Such a shock absorber is known from DE-A 3 434 566.

The object of such an electrically adjustable shock absorber is to permit adaptation of the absorption to the type of road surface; where there is a good-quality road surface little shock absorption is selected, while a high shock absorption setting of the shock absorbers is chosen where the road surface is poor.

In the known shock absorber the control means consists of a rotatable cylinder with openings which can be placed in register with openings of differing size in the sleeve. Through their relatively small dimensions, these latter openings have a great influence on the damping characteristic, at least at relatively low speed of the piston. If this speed exceeds a certain value, the damping fluid will flow via a non-return valve essentially round the sleeve and control means from one side of the piston to the other, so that the switch position of the rotatable cylinder now has only a very small influence on the damping characteristic. In other words, the shock absorption in this known construction is hardly adjustable at higher piston speeds.

The object of the invention is to avoid these disadvantages and produce a shock absorber of the type mentioned in the preamble, whose shock absorption is electrically adjustable over the entire speed range of the piston, and in which the form of sleeve and control means has no essential influence on the shock absorption.

According to the invention, the shock absorber is to this end characterized in that the openings or series of openings are axially spaced in said sleeve, the control means consist of a slide which is axially displaceable inside the sleeve and has axial throughflow channels which do not affect the shock absorption, while the length of the wall of the slide is smaller than the axial distance between the openings or series of openings in the sleeve, and that the openings or series of openings in the sleeve are so large that they do not essentially effect the shock absorption, while both at high and low piston speeds the slide alone determines via which duct system the damping fluid can flow through the piston.

In the switch positions in which the damping medium flows only through one or more of the damping duct systems, the damping characteristic is determined both at high and at low piston speed entirely by the damping properties of the particular duct systems. The possibility is not excluded that in a particular switch position of the control means the damping medium does not flow through the duct systems to be shut off or released by the control means, but takes a different route through the piston. However, in that case also this selection is determined by the switch position of the control means, and the damping characteristics are adjustable even at high piston speed.

EP-A 0 207 409, published after the filing date of the present application, discloses a shock absorber comprising a cylinder with damping fluid, a piston with piston rod displaceable in said cylinder, a sleeve disposed in the piston and having at least two openings or series of openings, whilst at least two duct systems of differing damping characteristic are disposed in the piston and each duct system connects to an opening or series of openings in the sleeve. Further, the shock absorber comprises control means to close off or release one or more of the openings in the sleeve. The control means consist of a slide carried as a control pin having a shoulder which in its lowest position engages an annular seat around some holes leading towards a valve. To switch the control pin from the lowest to the middle position – thereby raising the shoulder from the annular seat – a high force is needed. Since the throughflow channels in the slide of the shock absorber of the present application are always open, this disadvantage cannot appear in the shock absorber of the present invention.

The invention will now be explained in greater detail with reference to an embodiment shown in the figures.

The figures each show a cross section through a shock absorber, in which the control means are at various positions corresponding to differing damping characteristics.

Solid arrows show the direction of movement of the piston and the corresponding direction of flow of the damping medium on the outward stroke, and dotted arrows show the direction of movement of the piston and the corresponding direction of flow of the damping medium on the inward stroke.

Only the part of the shock absorber which is important for the invention is shown in the three figures. The shock absorber comprises a cylinder 1 with shock absorber piston rod 2 and attached thereto a piston. ChassiS or wheel suspension parts of the particular vehicle may be attached to the ends of cylinder and piston rod. In the cylinder/piston assembly is a damping medium which is known per se. In the piston rod 2 is a magnetic device 3, comprising a coil 4 and a core 5 moving therein. This core 5 projects via a sealing assembly into a cylindrical sleeve 7 which is in line with the piston rod 2, and around which the piston is fastened. This cylindrical sleeve 7 is provided with three sets of openings 8, 9 and 10 respectively. Disposed in this sleeve 7 is a slide 11 which can slide in the axial direction. This slide is provided with axial openings 12 through which the medium can flow unimpeded. The slide 11 is connected to the core 5. The wall 13 of the slide can on displacement come to rest in front of the openings 9 or the openings 10. The openings 9 are connected via a first chamber 14 to an opening 15, against which a spring-loaded one-way valve 16 rests. This opening 15 is disposed in a body 17 on which rests a sealing element 18. The latter is also provided with a one-way valve 19 which can open and close a duct 20. The element 18 with the sealing element 21 forms the actual seal between cylinder and piston rod. The opening 10 is connected to a second chamber 22 which is provided with one-way valves 23 and 24. One-way valve 24 is loaded by a conical spiral spring 25, while one-way valve 23 is loaded by a spring packet 26 in the rest position. This spring packet 26 also serves to push the one-way valve 16 back to the initial position. The body 27 bounding the second chamber is at such a distance from the shock absorber cylinder 1 that damping medium can flow freely between them. The sleeve 7 is bounded on the under side by a floor 28.

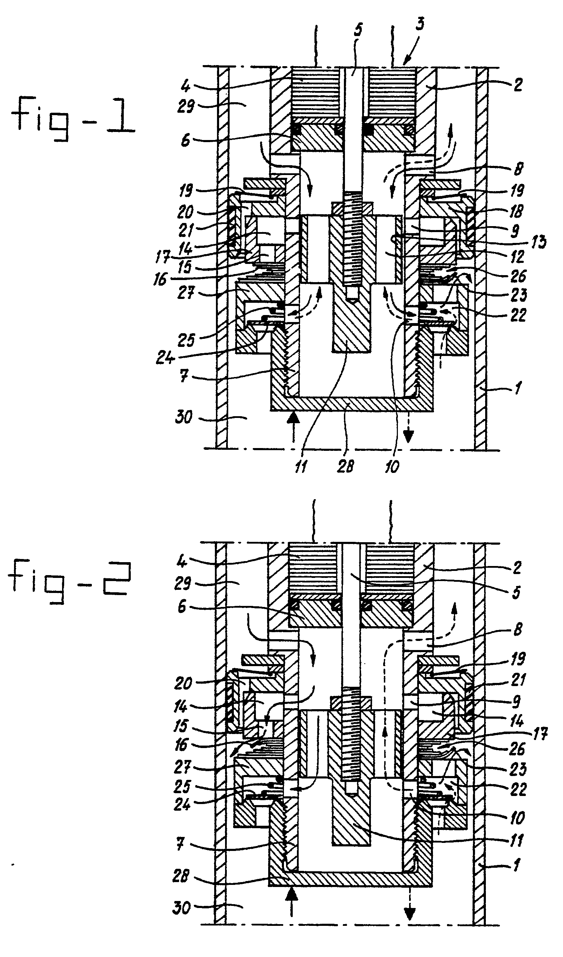

The shock absorber works as follows: In the top position of the slide 11 shown in Fig. 1, on the outward movement of the shock absorber, indicated by a solid arrow, the damping medium is displaced from the space 29 to the space 30. The medium thereby flows unimpeded through the openings 8 to the inside of the piston rod. Since the wall 13 is in front of the openings 9, no medium can flow through them. The one-way valve 19 also impedes the passage of the medium. The medium is consequently forced to move through the opening 10 to the space 30 and thereby to pass through a duct system causing shock absorption. When it arrives in the second chamber 22, the one-way valve 24 impedes further throughflow, but the one-way valve 23, against the pressure of the spring packet 26, permits outflow of the medium as shown by the solid arrow. On the inward stroke, where the medium has to be displaced from space 30 to space 29, the medium flows via the one-way valve 24, the opening 10, the opening 12 and the opening 8 to the space 29. The valve 19 requires so much force to be opened that it remains shut in the position shown in Fig. 1.

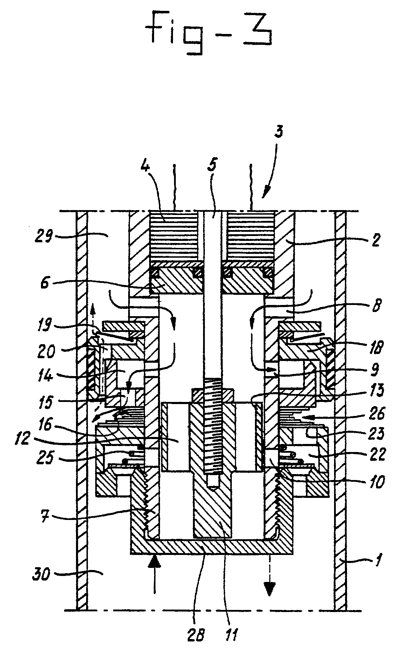

In the intermediate position shown in Fig. 2, the damping medium on the outward stroke flows out of the space 29 to the space 30, where this medium can flow not only in the above-described manner through the openings 8, 12, 10, the second chamber 22 and the one-way valve 23 but also, because the opening 9 is now released via the chamber 14 and the one-way valve 16 to the space 30. This means that the shock absorption is considerably less than that in the embodiment shown in Fig. 1.

If the piston moves inwards in the intermediate position of the slide shown in Fig. 2, which is indicated by dotted lines, the fluid can flow via the one-way valve 24 and the openings 10, 12, 8 from the space 30 into the space 29. Releasing the opening 9 has no effect on the damping characteristic of the inward stroke. For the one-way valve 16 does not allow any medium through in that direction of flow.

Fig. 3 shows the bottom position of the slide 11. Here the opening 10 is shut off by the wall 13 of the slide 11. On the outward stroke of the piston the medium flows from the space 29 to the space 30, as shown by solid lines. Since the opening 10 is shut off, flow through the one-way valve 23 is no longer possible. The medium can now only flow through the one-way valve 16 to the outside. On the inward stroke of the shock absorber the flow route through the one-way valve 24 is made impossible through the fact that the opening 10 is shut off. The medium can only flow through the duct 20 to the space 29 through opening of the valve 19. The shock absorption in the two directions of flow is very great.

It can be seen from the above that the construction shown produces three different damping characteristics for the outward stroke and two different damping characteristics for the inward stroke. Through the use of a slide in conjunction with separate throttling openings and one-way valves which form the actual shock absorber devices, the accuracy of positioning of the slide 12 can be limited to sealing or otherwise of the relevant openings.

An ordinary bottom valve can be present in the bottom of the shock absorber to prevent overloading.

Many modifications are possible within the scope of the invention. For example, it is not out of the question for electrically operated valves to be used instead of the slide 11 for each of the series of openings 9 and 10 individually, in which case, as in the case shown in the drawings, a choice can be made from three possibilities:

1) closing of openings 9 and releasing of openings 10,

2) releasing of openings 9 and closing of openings 10,

3) releasing of both openings 9 and openings 10.

Of course, more than two series of openings 9 and 10 are possible, in which case the shock absorption can be more finely adjusted to the road surface.

Important for the invention is that the medium flows at all piston speeds are determined by the position of the slide or equivalent control means and that consequently the shock absorption is adjustable at all piston speeds. The openings 8, 9, 10 and 12 are so large that they exert no appreciable influence on the shock absorption.

## Claims

Shock absorber comprising a cylinder with damping fluid, a piston with piston rod (2) displaceable in said cylinder, a sleeve (7) disposed in the piston and having at least two openings or series of openings (9 and 10) while at least two duct systems (15–18; 19, 20; 22–26) of differing damping characteristic are disposed in the piston, and each duct system connects to an opening or series of openings in the sleeve, and where electrically operated control means (11) are present to close off or release one or more of the openings (9, 10) in the sleeve as desired, characterized in that the openings or series of openings are axially spaced in said sleeve, the control means consist of a slide (11) which is axially displaceable inside the sleeve and has axial throughflow channels (12) which do not affect the shock absorption, while the length of the wall of the slide (11) is smaller than the axial distance between the openings or series of openings (9, 10) in the sleeve (7), and that the openings or series of openings (9, 10) in the sleeve are so large that they do not essentially effect the shock absorption, while both at high and low piston speeds the slide (11) alone determines via which duct system the damping fluid can flow through the piston.

## Patentansprüche

Stoßdämpfer mit einem Dämpfungsflüssigkeit enthaltenden Zylinder, einem verschiebbar in diesem Zylinder angeordneten Kolben mit Kolbenstange (2) und mit einer im Kolben angeordneten und zumindest zwei Öffnungen oder Öffnungsreihen (9 und 10) aufweisenden Buchse (7), wobei in dem Kolben zumindest zwei Leitungssysteme (15–18; 19, 20; 22–26) unterschiedlicher Dämpfungscharakteristik angeordnet und jeweils an eine Öffnung oder Öffnungsreihe der Buchse angeschlossen sind, und wobei eine elektrisch betätigte Steuerung (11) vorgesehen ist zum wahlweisen Schließen oder Freigeben einer oder mehrerer Öffnungen (9, 10) in der Buchse, dadurch gekennzeichnet, daß die Öffnungen oder Öffnungsreihen in der genannten Buchse in axialem Abstand voneinander angeordnet sind, daß die Steuerung aus einem Schieber (11) besteht, der innerhalb der Buchse axial verschiebbar ist und axiale, die Stoßdämpfung nicht beeinflussende Durchströmkanäle (12) aufweist, wobei die Wandungslänge des Schiebers (11) kleiner ist als der axiale Abstand zwischen den Öffnungen oder Öffnungsreihen (9, 10) in der Buchse (7); und daß die Öffnungen oder Öffnungsreihen (9, 10) in der Buchse so groß sind, daß sie die Stoßdämpfung nicht wesentlich beeinflussen, wobei sowohl bei hohen als auch bei niedrigen Kolbengeschwindigkeiten allein der Schieber (11) festlegt, über welches Leitungssystem die Dämpfungsflüssigkeit durch den Kolben strömt.

## Revendications

Amortisseur comprenant un cylindre contenant un fluide d'amortissement, un piston comportant une tige de piston (2) et déplaçable dans le cylindre, un manchon (7) disposé dans le piston et comportant au moins deux orifices ou séries d'orifices (9 et 10), tandis qu'au moins deux systèmes de passages (15–18; 19, 20; 22–26) à caractéristiques d'amortissement différentes sont disposés dans le piston et que chaque système de passages communique avec un orifice ou une série d'orifice du manchon, des moyens de réglage (11) à commande électrique étant présents pour obturer ou libérer un ou plusieurs des orifices (9, 10) du manchon de la manière qu'on désire, caractérisé en ce que les orifices ou séries d'orifices sont espacés axialement dans le manchon, les moyens de réglage sont constitués d'un tiroir (11) qui est déplaçable axialement à l'intérieur du manchon et qui comporte des passages axiaux (12), le traversant de part en part, qui n'affectent pas l'amortissement, tandis que la longueur de la paroi du tiroir (11) est inférieure à la distance axiale existant entre les orifices ou séries d'orifices (9, 10) du manchon (7), et en ce que les orifices ou séries d'orifices (9, 10) du manchon sont suffisamment grands pour ne pas exercer pratiquement d'effet d'amortissement, tandis que, aussi bien aux vitesses élevées qu'aux faibles vitesses du piston, seul le tiroir (11) détermine par quel système de passages le fluide d'amortissement peut s'écouler à travers le piston.

fig-1

fig-2

# Fig-3